# EUROPÄISCHE PATENTSCHRIFT

(11) **EP 1 590 241 B1**
(45) Veröffentlichungstag und Bekanntmachung des Hinweises auf die Patenterteilung: **13.09.2006**
(21) Anmeldenummer: 03782397.8
(22) Anmeldetag: 13.12.2003
(51) Int. Cl.: B64C 27/00

(54) **VERFAHREN ZUR DÄMPFUNG VON HECKAUSLEGER-SCHWINGUNGEN VON DREHFLÜGELZEUGEN UND DREHFLÜGELFLUGZEUG MIT EINER HECKAUSLEGER-SCHWINGUNGSDÄMPFUNGSVORRICHTUNG**
METHOD FOR DAMPING REAR EXTENSION ARM VIBRATIONS OF ROTORCRAFTS AND ROTORCRAFT WITH A REAR EXTENSION ARM VIBRATION DAMPING DEVICE
PROCEDE POUR AMORTIR DES VIBRATIONS DE CANTILEVER ARRIERE DE GIRAVION ET GIRAVION EQUIPE D'UN DISPOSITIF D'AMORTISSEMENT DE VIBRATIONS DE CANTILEVER ARRIERE

(30) Priorität: 03.02.2003 DE 10304336
(43) Veröffentlichungstag der Anmeldung: 02.11.2005
(73) Patentinhaber: EUROCOPTER DEUTSCHLAND GmbH, 86609 Donauwörth (DE)
(72) Erfinder: STREHLOW, Henning, 81739 München (DE); ROTTMAYR, Heiner, 83064 Raubling (DE); DÜRR, Johannes, K., 88709 Meersburg (DE); ZAGLAUER, Helmut, W., 78351 Bodmann-Ludwigshafen (DE)
(74) Vertreter: Duschek, Horst Jürgen
(86) Internationale Anmeldenummer: PCT/EP2003/014216
(87) Internationale Veröffentlichungsnummer: WO 2004/069655

(56) Entgegenhaltungen:
- DE-A- 10 139 686
- DE-A- 19 925 982
- US-A- 5 816 533

## Beschreibung

### TECHNISCHES GEBIET

Die vorliegende Erfindung betrifft ein Verfahren zur Dämpfung von Heckausleger-Schwingungen von Drehflügelflugzeugen, insbesondere von Hubschraubern, sowie ein Drehflügelflugzeug, insbesondere ein Hubschrauber, mit einer Heckausleger-Schwingungsdämpfungsvorrichtung.

### STAND DER TECHNIK

Luftfahrtstrukturen werden aus Gründen der Gewichtsersparnis zunehmend aus Faserverbundwerkstoffen gefertigt. Derartige Strukturen verfügen bei hoher Steifigkeit naturgemäß über eine geringe Eigendämpfung. Dies trifft beispielsweise auch auf die Heckausleger moderner Drehflügelflugzeuge, wie zum Beispiel Hubschrauber, zu.

Obwohl die Entwicklung moderner Hubschrauber von umfangreichen numerischen Strömungssimulationen und Windkanalversuchen begleitet wird, treten in der Praxis häufig unerwünschte Heckausleger-Schwingungen auf, die zu Schwingungen der gesamten Hubschrauberzellenstruktur führen bzw. im gesamten Hubschrauber bemerkbar sind. Die Heckausleger- Schwingungen lassen sich in der Regel in zwei typische Schwingungsarten bzw. Schwingungsformen einteilen, die man als "Tail Shake" und "Vertical Bouncing" bezeichnet. Beim Tail Shake handelt es sich um extern angeregte, induzierte Schwingungen des Heckauslegers in lateraler Richtung (laterale Eigenform), und beim Vertical Bouncing um extern angeregte, induzierte Schwingungen in vertikaler Richtung (vertikale Eigenform), welche sich in die gesamte Hubschrauberstruktur fortpflanzen bzw. im gesamten Hubschrauber zu spüren sind.

Tail Shake und Vertical Bouncing sind typische Drehflügelflugzeug- bzw. Hubschraüberphänomene. Tail Shake beruht einerseits auf der Interaktion des turbulenten Nachlaufs des Hauptrotors bzw. der Hubschrauberzelle und der Turbinen- bzw. Getriebeverkleidungen mit der Struktur des Heckauslegers, andererseits auf der veränderlichen lateralen Luftlast, die durch sich instationär ablösende Wirbel im Nachlauf des Heckauslegers in dessen Struktur eingekoppelt wird (sog. lock-in-Phänomen bei vortex shedding). Vertical Bouncing wird insbesondere durch Turbulenzerregung und Steuerrückkopplungen, ggf. mit ungewollter Beteiligung des Piloten verursacht. Die durch Tail Shake oder Vertical Bouncing hervorgerufenen Schwingungen machen sich (abhängig vom Hubschraubertyp und dessen Flugzustand) üblicherweise bei Fluggeschwindigkeiten von ca. 70-120 Knoten besonders bemerkbar. Eine Vorhersage der Wechselwirkung zwischen Aerodynamik und Hubschrauberstruktur konnte trotz intensiver Bemühungen der Fachwelt bislang nicht zuverlässig realisiert werden.

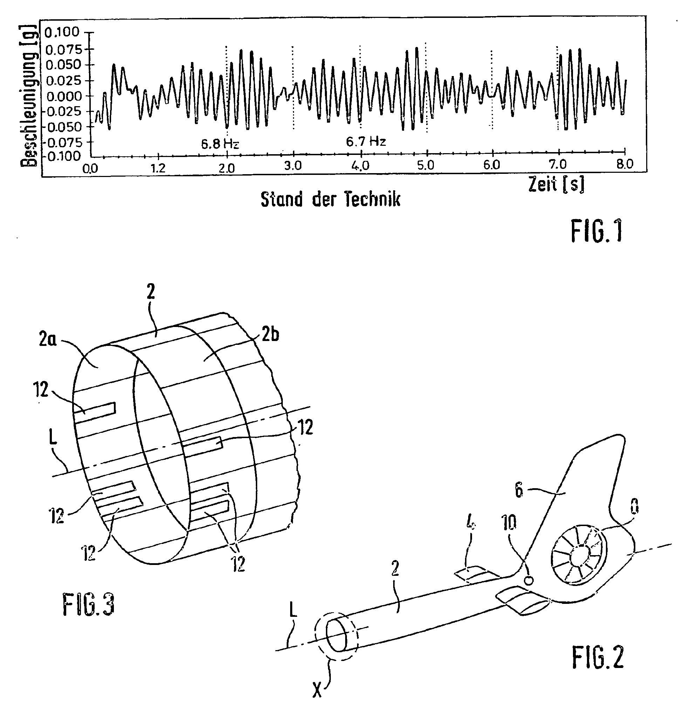

Bei den beim Tail Shake bzw. Vertical Bouncing eher unregelmäßig und zufällig auftretenden niederfrequenten stochastischen Schwingungen bzw. Wirbelresonanzschwingungen der Hubschrauberzellenstruktur in vertikaler und lateraler Richtung treten zudem Überlagerungen auf, die in Schwebungen resultieren. Sämtliche dieser Schwingungen beeinträchtigen die Flugsteuerung in sehr negativer Weise, sie sind jedoch nicht primär ein sicherheitsrelevantes Problem. Da vorwiegend die niederen elastischen Moden der Hubschrauberstruktur in einem Bereich von ca. 5 Hz bis 8 Hz angeregt werden, und die sich somit ergebenden Strukturmoden über zwei Schwingungsknoten verfügen, werden sie von der Hubschrauberbesatzung besonders im Bereich vor dem vorderen Schwingungsknoten - also primär dem Cockpitbereich des Hubschraubers - wahrgenommen. Dadurch wirken sie diese Effekte insbesondere auf die Piloten, aber auch auf Passagiere beträchtlich komfortmindernd bis leistungseinschränkend aus. Durch die Überlagerung der beiden zuvor beschriebenen Schwingungsarten ist die Hubschraubercrew neben lateralen und plötzlichen niederfrequenten Schwingungen ausgesetzt, die sich durch ein Rütteln bemerkbar machen. In der Fig. 1 ist zur Veranschaulichung der aus Heckausleger-Schwingungen resultierenden Phänomene ein beispielhafter zeitabhängiger Schwingungsverlauf mit überlagerten Schwebungen, gemessen an einem Pilotensitz eines Hubschraubers gemäß dem Stand der Technik, dargestellt.

Es sind diverse Untersuchungen und Versuche unternommen worden, Tail Shake und Vertical Bouncing sowie die damit verbundenen, zuvor beschriebenen nachteiligen Effekte zu vermeiden bzw. zumindest soweit zu reduzieren, dass sie von Crew und Passagieren eines Hubschraubers nicht mehr wahr genommen werden.

Ein erster Ansatz richtete sich auf eine Verbesserung der aerodynamischen Eigenschaften im Bereich von Rotor, Triebwerk und Getriebe des Hubschraubers, was durch eine geeignete Verkleidung der genannten Komponenten zu realisieren versucht wurde. Diese Lösung zeigte hinsichtlich der erzielbaren Heckausleger-Dämpfungseigenschaften jedoch nur eine recht eingeschränkte Wirksamkeit.

Ein zweiter Ansatz zielte auf eine Erhöhung der Strukturdämpfung des Heckauslegers durch den Einsatz zusätzlicher passiver Dämpfungsmaterialien bzw. Dämpfer ab. Als nachteilig stellte sich hierbei zum einen die durch die zusätzlichen passiven Dämpfungselemente in das Gesamtsystem des Hubschraubers eingebrachte zusätzliche Masse und zum anderen die nur eingeschränkte Wirksamkeit heraus.

Der gewünschte technische Erfolg konnte daher mit keinem dieser Ansätze erzielt werden.

Aus der US 5,816,533 A1 ist ein Verfahren zur Dämpfung von Heckausleger-Schwingungen von Hubschraubern sowie ein Hubschrauber mit einer Heckausleger-Schwingungsdämpfungsvorrichtung bekannt. Bei diesem Verfahren bzw. diesem Hubschrauber stellt der verstellbare Heckrotor des Hubschraubers die wesentliche Komponente der Heckausleger-Schwingungsdämpfungsvorrichtung dar. Der Heckrotor ist in einen geschlossenen Regelkreis eingebunden. Durch Sensoren erfasste Heckauslegerschwingungen in Form eines Tail Shakes werden durch ein Gegensteuern mittels des Heckrotors gedämpft. Dieses Verfahren und diese Hubschrauberkonstruktion hat sich jedoch nicht bewährt. Zum einen ist mit diesem Verfahren ausschließlich der Tail-Shake-Effekt zu dämpfen, und zum anderen ist der Heckrotor zu Dämpfungszwecken nur eingeschränkt wirksam und insbesondere auch viel zu träge. Die Dämpfungswirkung ist daher äußerst gering. Darüber hinaus stellt ein Heckrotor eine hochgradig sicherheitsrelevante Komponente dar, die nicht für andere Zwecke eingesetzt werden sollte, da ein Ausfall eines derartigen sicherheitsrelevanten Systems die Flugeigenschaften des Hubschraubers und damit die gesamte Sicherheit stark gefährden kann. Diese Lösung hat sich daher als nachteilig erwiesen.

Aus der DE 199 25 982 ist ein Drehflügler mit einer zwischen dem Heckausleger und der zelle aktiv ansteuerbaren Schnittstelle bekannt.

### DARSTELLUNG DER ERFINDUNG

Der Erfindung liegt die Aufgabe beziehungsweise das technische Problem zugrunde, ein effektives Verfahren zur Dämpfung von Heckausleger-Schwingungen von Drehflügelflugzeugen sowie ein Drehflügelflugzeug, insbesondere einen Hubschrauber, mit verbesserten Heckausleger-Schwingungseigenschaften und damit einem erhöhten Flugkomfort zu schaffen.

Diese Aufgabe wird gelöst durch ein erfindungsgemäßes Verfahren mit den Merkmalen des Anspruchs 1.

Dieses Verfahren zur Dämpfung von Heckausleger-Schwingungen von Drehflügelflugzeugen, insbesondere von Hubschraubern, umfasst folgende Schritte:

Erfassen von durch externe Schwingungsanregung bzw. Selbsterregung induzierten Heckausleger-Schwingungen; und auf Grundlage der erfassten induzierten Heckausleger-Schwingungen Erzeugen und Einkoppeln von den induzierten Heckausleger-Schwingungen gegenphasigen Dehnungen in den Heckausleger und dadurch Dämpfen der extern angeregten induzierten Heckausleger-Schwingungen.

Sowohl das Erfassen der Heckausleger-Schwingungen als auch das Einkoppeln der gegenphasigen Dehnungen (Elongationen und/oder Kontraktionen) in den Heckausleger und damit letztendlich das Dämpfen der Heckausleger-Schwingungen kann hierbei erfindungsgemäß in einer oder mehreren Achsen bzw. Schwingungsebenen erfolgen.

Zur Erzielung des Dämpfungseffektes können erfindungsgemäß nur Elongationen, nur Kontraktionen oder sowohl Elongationen als auch Kontraktionen eingekoppelt werden. Diese eingekoppelten gegenphasigen Dehnungen führen zu einer den jeweiligen Heckausleger-Schwingungen gegenphasigen Auslenkung bzw. Dehnung des Heckauslegers bzw. angrenzender Rumpfstrukturen und benachbarter Anbaukomponenten (z.B. Rumpfzelle, Höhenleitwerk, Seitenleitwerk, Hauptrotordrehmoment-Kompensationseinrichtungen, wie beispielsweise ein Heckrotor und dessen Komponenten, Heckausleger-Trennstellen bei faltbaren Heckauslegern usw.). Dadurch lassen sich die unterwünschten, induzierten Heckausleger-Schwingungen bzw. Schwingungsamplituden, die faktisch im gesamten Drehflügelflugzeug spürbar sind, erheblich reduzieren bzw. gänzlich kompensieren. Aufgrund dieser erzielbaren vorteilhaften Schwingungsdämpfungseffekte ist eine signifikante Verbesserung des Piloten-und Passagierkomforts an Bord des Drehflügelflugzeugs realisierbar.

Bei der erfindungsgemäßen Lösung ist die Dämpfungswirkung anders als beim Stand der Technik auch nicht nur auf eine bestimmte Schwingungsrichtung beschränkt, sondern kann je nach Ort und Richtung der Einkoppelung grundsätzlich für nahezu jede auftretende Schwingungsrichtung zur Verfügung gestellt werden. Mit dem erfindungsgemäßen Verfahren können daher beispielsweise sowohl Tail Shake-Effekte (lateral) als auch Vertical Bouncing-Effekte (vertikal) wirkungsvoll gedämpft werden. Die Dämpfung der jeweiligen Schwingungsarten kann unabhängig voneinander oder aber auch gemeinsam bzw. gleichzeitig erfolgen. Es ist überdies natürlich auch eine höchst effektive Dämpfung von Heckausleger-Schwingungen realisierbar, die eine andere räumliche Orientierung als Tail Shake und Vertical Bouncing aufweisen. So können nach dem erfindungsgemäßen Prinzip grundsätzlich z.B. auch Torsionsschwingungen gedämpft werden. Gleichermaßen ist die Dämpfung entsprechend überlagerter Schwingungsformen möglich. Das erfindungsgemäße Verfahren gestattet somit auf einfache und effektive Art und Weise eine Erhöhung der Strukturdämpfung des Heckauslegers und damit letztendlich auch eine Dämpfung der gesamten Drehflügelflugzeugstruktur.

Die positive Wirkung des erfindungsgemäßen Verfahrens ist grundsätzlich unabhängig von dem Material des Heckauslegers bzw. der Rumpfstruktur des Drehflügelflugzeugs sowie etwaiger Anbaukomponenten erreichbar. D.h., es lassen sich z.B. auch Schwingungen von Heckauslegern oder benachbarten Rumpfstrukturen wirkungsvoll dämpfen, die aus Werkstoffen, wie z.B. Faserverbundwerkstoffen, hergestellt sind, die per se schlechte Eigendämpfungseigenschaften besitzen. Das erfindungsgemäße Verfahren gestattet sogar die Dämpfung sehr großer und hochsteifer Luftfahrtstrukturen. Das erfindungsgemäße Verfahren ist grundsätzlich bei jedem Drehflügelflugzeug- bzw. Hubschraubertyp anwendbar. Darüber hinaus ist es konstruktiv relativ simpel und mit vergleichsweise einfachen apparativen Mitteln zu verwirklichen, wie nachfolgend noch deutlicher werden wird.

Weitere bevorzugte und vorteilhafte Ausführungsmerkmale des erfindungsgemäßen Verfahrens sind Gegenstand der Unteransprüche 2 bis 10.

Die der Erfindung zugrunde liegende Aufgabe wird ferner gelöst durch ein erfindungsgemäßes Drehflügelflugzeug mit den Merkmalen des Anspruchs 11.

Dieses Drehflügelflugzeug, insbesondere ein Hubschrauber, umfasst einen Rumpf, einen in den Rumpf integrierten Cockpitbereich, einen am Rumpf angeordneten Heckausleger sowie eine Heckausleger-Schwingungsdämpfungsvorrichtung mit: mindestens einer Sensoreinrichtung zum Erfassen von durch externe Schwingungsanregung induzierten Heckausleger-Schwingungen; sowie mindestens einen an einer Seite des Heckauslegers an einer Heckauslegerstruktur angreifenden und mit der Sensoreinrichtung funktional gekoppelten Aktuator zum Erzeugen und Einkoppeln von den induzierten Heckausleger-Schwingungen gegenphasigen Dehnungen in den Heckausleger.

Das erfindungsgemäße Drehflügelflugzeug bietet im Wesentlichen die gleichen Vorteile, wie sie bereits weiter oben im Zusammenhang mit dem erfindungsgemäßen Verfahren beschrieben wurden. Darüber hinaus können konventionelle Drehflügelflugzeuge relativ einfach auf ein erfindungsgemäßes Drehflügelflugzeug umgerüstet werden, wie nachfolgend noch deutlicher werden wird. Überdies stellt die erfindungsgemäße Lösung (und hierbei insbesondere der mindestens eine an einer Seite des Heckauslegers an der Heckauslegerstruktur angreifende Aktuator zum Erzeugen und Einkoppeln von den induzierten Heckausleger-Schwingungen gegenphasigen Dehnungen in den Heckausleger) kein sicherheitsrelevantes System dar, bei dessen Ausfall eine Gefährdung der Flugeigenschaften bzw. der Sicherheit des Drehflügelflugzeugs zu befürchten wäre.

Weitere bevorzugte und vorteilhafte Ausgestaltungsmerkmale des erfindungsgemäßen Drehflügelflugzeugs sind Gegenstand der Unteransprüche 12 bis 26.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen beispielhaften zeitabhängigen Schwingungsverlauf mit überlagerten Schwebungen, gemessen an einem Pilotensitz eines Drehflügelflugzeugs gemäß dem Stand der Technik;
- Fig. 2: eine schematische, perspektivische Ansicht eines wesentlichen Bereichs eines erfindungsgemäßen Drehflügelflugzeugs gemäß einer ersten Ausgestaltungsform;
- Fig. 3: eine schematische vergrößerte Ansicht der Einzelheit X aus Fig. 2;
- Fig. 4: schematische Ansichten von unterschiedlichen Aktuatoren, die in erfindungsgemäßen Drehflügelflugzeugen und in dem erfindungsgemäßen Verfahren anwendbar sind;
- Fig. 5: eine schematische perspektivische Gitterliniendarstellung eines wesentlichen Bereichs eines erfindungsgemäßen Drehflügelflugzeugs gemäß einer zweiten Ausgestaltungsform, zur Veranschaulichung eines erfindungsgemäßen Verfahrens;
- Fig. 6: ein erstes schematisches Schaltschema für eine einfache passive Dämpfung;
- Fig. 6a: ein zweites schematisches Schaltschema für eine passive Dämpfung;
- Fig. 6b: ein drittes schematisches Schaltschema für eine passive Dämpfung;
- Fig. 7: ein schematisches Diagramm zur beispielhaften Veranschaulichung des mit dem erfindungsgemäßen Verfahren hinsichtlich des Tail Shake-Effekts erzielbaren Heckausleger-Dämpfungsverhaltens bei einem erfindungsgemäßen Drehflügelflugzeug;
- Fig. 8: eine schematische Draufsicht auf einen Heckauslegerbereich eines erfindungsgemäßen Drehflügelflugzeugs gemäß einer dritten Ausgestaltungsform.

### DARSTELLUNG VON BEVORZUGTEN AUSFÜHRUNGSBEISPIELEN

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

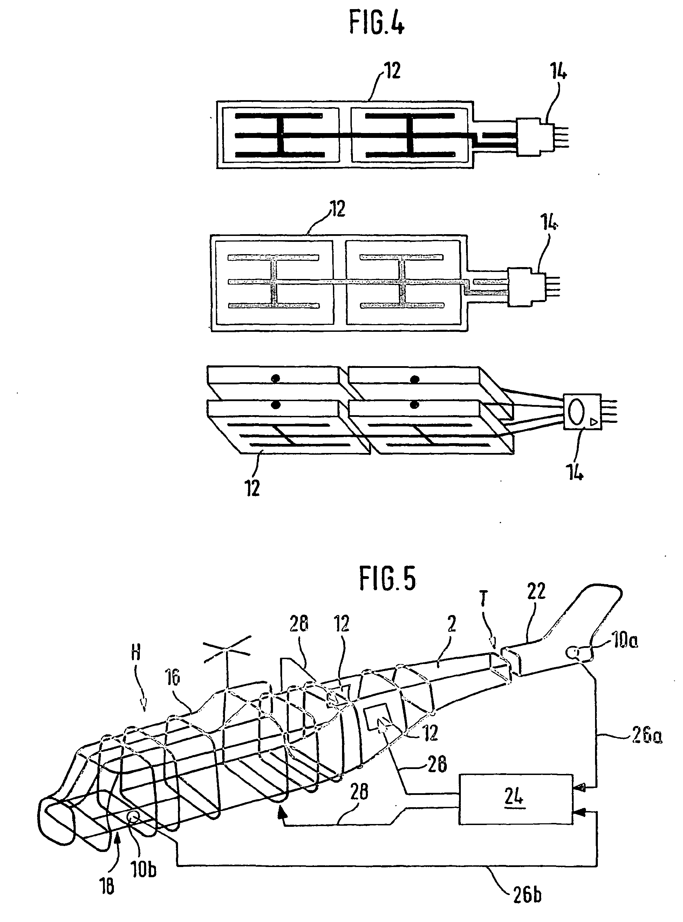

Fig. 2 zeigt eine schematische, perspektivische Ansicht eines wesentlichen Bereichs eines erfindungsgemäßen Drehflügelflugzeugs gemäß einer ersten Ausgestaltungsform zur Veranschaulichung eines erfindungsgemäßen Verfahrens gemäß einer ersten Ausführungsform. In der Fig. 3 ist eine schematische vergrößerte Ansicht der Einzelheit X aus Fig. 2 dargestellt. Bei dem Drehflügelflugzeug handelt es sich in diesem Fall um einen Hubschrauber, der einen Rumpf mit einem Hauptrotor und einer Antriebseinrichtung, einen in den Rumpf integrierten Cockpit- und Passagierkabinenbereich sowie einen am Rumpf angeordneten rohrförmigen Heckausleger 2 besitzt. Der Rumpf und der Heckausleger 2 sind im wesentlichen aus Faserverbundwerkstoffen, wie z.B. Kohlefaserverbundwerkstoffen, hergestellt. In der Fig. 2 ist der besseren Übersichtlichkeit halber nur der Heckausleger 2 mit seinen Anbaukomponenten dargestellt. Bei diesen Anbaukomponenten handelt es sich hier um ein an einem hinteren Bereich des Heckauslegers 2 angebrachtes Höhenleitwerk 4, ein Seitenleitwerk 6 sowie eine in das Seitenleitwerk 6 integrierte Hauptrotordrehmoment-Kompensationseinrichtung 8 in Form eines sog. Fenestrons.

Der Hubschrauber ist mit einer Heckausleger-Schwingungsdämpfungsvorrichtung ausgestattet, die im vorliegenden Ausführungsbeispiel dazu dient, den Tail Shake, also die horizontale Eigenform von Heckausleger-Schwingungen zu dämpfen. Die Heckausleger-Schwingungsdämpfungsvorrichtung besitzt eine Sensoreinrichtung mit mindestens einem Schwingungssensor 10 zum Erfassen von durch externe Schwingungsanregung induzierten Heckausleger-Schwingungen. Als Schwingungssensor 10 wird in diesem Beispiel ein Schwingungsgeschwindigkeitsgeber verwendet, der vorzugsweise in einem hinteren Bereich des Heckauslegers 2 angeordnet ist, da dort bei einer Heckausleger-Schwingung die größten Schwingungsgeschwindigkeiten auftreten und somit ein gutes Sensorsignal erzielbar ist. Ebenso könnten jedoch auch geeignete Sensoren, wie zum Beispiel Dehnungssensoren oder dergleichen, verwendet werden. Dehnungssensoren sollten vorzugsweise im Bereich der Rumpfanbindung des Heckauslegers 2 platziert werden, da dort die bei einer Heckausleger-Schwingung auftretenden Dehnungen am größten sind.

Die Heckausleger-Schwingungsdämpfungsvorrichtung umfasst ferner einen oder mehrere Aktuatoren 12, die bezogen auf den in der Fig. 3 erkennbaren Querschnitt des Heckauslegers 2 an gegenüberliegenden Seiten des Heckauslegers 2 an der Heckauslegerstruktur angreifen. Genauer gesagt, sind die Aktuatoren 12 im Bereich der Rumpfanbindung des Heckauslegers 2 bzw. am Übergangsbereichs zwischen dem Heckausleger 2 und dem Rumpf an der bezogen auf die normale Vorwärtsflugrichtung des Hubschraubers linken und rechten Seite des Heckauslegers 2 und symmetrisch zur Mittenlängsachse L des Heckauslegers 2 angeordnet. Im Falle von Heckausleger-Schwingungen liegen in diesem Bereich üblicherweise die Stellen höchster struktureller Dehnungsenergie bzw. die Stellen des höchsten Biegemomentes des Heckauslegers 2. Pro Heckauslegerseite ist in dieser Ausführungsform mindestens ein Aktuator 12 vorgesehen. Die zuvor erwähnte Anordnung auf der linken und rechten Heckauslegerseite entspricht einer zur Dämpfung des Tail Shake bevorzugten Anordnung. Für den Fall der Dämpfung des Vertical Bouncing sind die Aktuatoren 12 vorzugsweise an der Ober- und Unterseite des Heckauslegers und/oder an der Ober- und Unterseite des Übergangsbereichs zwischen dem Heckausleger 2 und dem Rumpf angeordnet. Zur Dämpfung anderer Schwingungsformen bzw. - richtungen können entsprechend andere geeignete Anbringungsorte gewählt werden. Hierbei sind Orte oder Stellen, die symmetrisch zur Längsachse des Heckauslegers 2 liegen, grundsätzlich bevorzugt.

Sollen sowohl Tail Shake als auch Vertical Bouncing gedämpft werden, so sind die Aktuatoren 12 an beiden der zuvor genannten Anbringungsbereiche (links, rechts, oben, unten) vorzusehen. Für die vorliegenden Beispiele wird der Einfachheit halber angenommen, dass nur der Tail Shake gedämpft werden soll. Die Dämpfung des Vertical Bouncing erfolgt prinzipiell auf gleichartige Weise, so dass diesbezüglich eine separate Erläuterung nicht erforderlich ist.

Als Aktuatoren 12 werden im Rahmen der erfindungsgemäßen Lösung vorzugsweise piezoaktive Aktuatoren bzw. Aktuatoren auf Basis piezokeramischer Werkstoffe verwendet. Hierzu zählen piezoelektrische (PZT, PLZT) und elektrostriktive (PMN) Materialien. Bei piezokeramischen Werkstoffen führt ein zwischen zwei Elektroden angelegtes elektrisches Feld, sprich eine angelegte elektrische Spannung, in Abhängigkeit der jeweiligen Polung zu Dehnungen in Form einer Elongation oder Kontraktion des Materials. Aktuatoren 12 aus derartigen Werkstoffen sind damit in der Lage, elektrische Energie direkt in mechanische Energie umzuwandeln. Der zuvor geschilderte Effekt ist bei piezoelektrischen Werkstoffen umkehrbar. D.h. im Falle einer auf einen solchen Werkstoff ausgeübten zeitlich veränderlichen mechanischen Dehnung entsteht zwischen den Elektroden eine Ladungsverschiebung, die über die Elektroden wiederum als elektrische Spannung bzw. elektrisches Sensorsignal abgegriffen werden kann. Die zuvor erläuterten Aktuatoren werden nachfolgend kurz als Piezoaktuatoren 12 bezeichnet. Sie bieten Vorteile wie hohe Stellauflösung, hohe Stellkräfte und sehr kurze Ansprechzeiten bei kleinem Bauvolumen.

Die Piezoaktuatoren 12 sind vorzugsweise flach und plattenförmig ausgebildet. Die Stellrichtung derartiger flächiger Piezoaktuatoren verläuft im wesentlichen parallel zur Plattenebene. Die Piezoaktuatoren 12 sind zum Beispiel in Form von piezokermaischen Folien, dünnen Platten, Wafern oder Fasern, einschließlich piezokeramischer Fasern mit Interdigitalelektrode, bereitstellbar. Mehrere flächige Piezoaktuatoren können auch in mehreren diskreten Lagen schichtweise übereinander angeordnet zu einem flächigen, plattenförmigen Aktuatorpaket konfektioniert sein. Dies ist als Multilayer-Struktur oder in bimorpher Gestaltung möglich. Die Piezoaktuatoren 12 mit einer Vielzahl einzelner Lagen sind vorzugsweise als sog. Qickpacks oder als Stapelaktuatoren ausgebildet. Sie besitzen Stapel dünner piezokeramischer Scheiben oder Fasern, die sich unter einem äußeren elektrischen Feld entlang der Stapellängsachse annähernd linear ausdehnen oder verkürzen. Bei Quickpacks, die auf dem piezoelektrischen d31-Effekt beruhend arbeiten, sind in der Regel bis zu ca. fünf übereinander angeordnete Lagen sinnvoll. Stapelaktuatoren verfügen üblicherweise über deutlich mehr Einzellagen (>> 10) und arbeiten auf der Basis des ca. doppelt so effektiven d33-Effektes.

Fig. 4 zeigt schematische Ansichten von unterschiedlichen zweilagigen flächigen Piezoaktuatoren 12 (hier: Quickpacks), die in erfindungsgemäßen Drehflügelflugzeugen und in dem erfindungsgemäßen Verfahren anwendbar sind. Hierbei handelt es sich um flächige, plattenförmige Piezoaktuatoren 12 auf Basis piezoelektrischer Folien. In der Fig. 4 ist links oben ein Standardaktuator mit der Typenbezeichnung QP40N und rechts davon ein Aktuator mit der Typenbezeichnung QP40W des Herstellers ACX gezeigt. Der QP40N-Aktuator ist aus zwei hintereinander angeordneten piezokeramischen Wafern je Ebene bei zwei übereinander liegenden Ebenen aufgebaut. Im unteren Teil der Fig. 4 ist eine Prinzipsskizze eines Piezoaktuators 12 mit Anschlussplan zu erkennen. Das kleine Dreieck an dem auf der rechten Seite erkennbaren Anschluss 14 kennzeichnet den Pluspol.

Bei dem erfindungsgemäßen Hubschrauber gemäß dem vorliegenden Ausführungsbeispiel sind die plattenförmigen Piezoaktuatoren 12 in geeigneter Weise mit der Struktur des Heckauslegers 2 verbunden. Dies kann zum Beispiel dadurch erfolgen, dass die Piezoaktuatoren 12 mittels geeigneter Fügeverfahren auf die Heckauslegerstruktur appliziert, d.h. beispielweise direkt auf die innere Oberfläche 2a, die äußere Oberfläche 2b oder beide Oberflächen 2a, 2b des Heckauslegers 2 aufgeklebt werden (siehe Fig. 3). Dadurch ergibt sich ein flächiger Verbund mit der als Trägerstruktur dienenden Oberfläche des Heckauslegers 2. Diese Technik eignet sich besonders dazu, konventionelle Hubschrauber auf einfache und effektive Art und Weise mit der erfindungsgemäßen Technologie nachzurüsten.

Die Piezoaktuatoren 12 können jedoch auch in die Heckauslegerstruktur integriert sein. Diese Variante eignet sich besonders für flache Piezoaktuatoren 12 mit einer platten- oder faserförmigen Struktur (vgl. Fig. 4). Derartige Aktuatoren 12 können beispielsweise direkt in die Heckauslegerstruktur einlaminiert werden und mit dieser einen flächigen Verbund bilden, was sich besonders bei modernen Heckauslegerkonstruktionen aus Faserverbundwerkstoffen anbietet. Das Einlaminieren der Aktuatoren 12 in die Struktur des Heckauslegers 2 (strukturelle Integration) muss jedoch bereits im Rahmen der Fertigung der Struktur in einem Zuge mit der Herstellung derselben erfolgen. Überdies ist es natürlich möglich, einen oder mehrere Aktuatoren 12 (z.B. Stapelaktuatoren) über ein oder mehrere diskrete Krafteinleitungselemente (z.B. eine Strebe oder dergleichen) an die Heckauslegerstruktur anzubinden.

Je nach Form des Heckauslegers 2 sind die Piezoaktuatoren 12 an ihrem jeweiligen Anbringungsort so ausgerichtet, dass ihre jeweiligen Stellrichtungen im wesentlichen oder annähernd parallel zur Mittenlängsachse L des Heckauslegers 2 bzw. parallel zur Oberfläche 2a, 2b der Heckauslegerstruktur verlaufen.

Da die Piezoaktuatoren 12 aufgrund der erläuterten Applikation bzw. Integration fest mit der Heckauslegerstruktur verbunden sind, ist folglich eine freie Dehnung der Piezoaktuatoren 12 blockiert. Bei Anlagen einer elektrischen Spannung an die Piezoaktuatoren 12 und der daraus resultierenden Elongation/Kontraktion der Piezoaktuatoren 12 übertragen diese folglich ihre Stellkräfte bzw. Dehnungen direkt auf ihre Trägerstruktur, sprich den Heckausleger 2, und können in diesem Dehnungen bzw. Biegemomente induzieren. Die Aktuatoren 12 fungieren somit als verstellbare Heckausleger-Verformungselemente bzw. Heckausleger-Biegeelemente. Mit Hilfe der Piezoaktuatoren 12 ist es bei einer geeigneten Kontrolle, z.B. einer Regelung bzw. Ansteuerung, daher möglich, zu im Betrieb des Hubschraubers auftretenden induzierten Heckausleger-Schwingungen gegenphasige Dehnungen und/oder Kontraktionen zu erzeugen und in den Heckausleger 2 einzukoppeln.

Die Piezoaktuatoren 12 sind funktional mit der Sensoreinrichtung bzw. deren Schwingungssensor(en) 10 gekoppelten, d.h. die können in Abhängigkeit von den durch die Sensoreinrichtung abgegebenen Sensorsignalen kontrolliert werden, wie nachfolgend noch näher erläutert werden wird. Der erfindungsgemäße Hubschrauber ist des Weiteren mit einer mit der Sensoreinrichtung und den Piezoaktuatoren 12 gekoppelten Kontroll- bzw. Regeleinrichtung zum kontrollierten Betätigen der Aktuatoren ausgerüstet (in Fig. 2 und 3 nicht gezeigt; vgl. Fig. 5). Die Kontroll- bzw. Regeleinrichtung umfasst unter anderem eine Ansteuerelektronik für die Piezoaktuatoren 12, einen Verstärker sowie einen geeigneten Steuer- bzw. Regelalgorithmus. Die Heckausleger-Schwingungsdämpfungsvorrichtung und ihre Komponenten werden von einer geeigneten Energiequelle (nicht gezeigt), z.B. einer Strom- bzw. Spannungsquelle gespeist.

Fig. 5 zeigt eine schematische perspektivische Gitterliniendarstellung eines wesentlichen Bereichs eines erfindungsgemäßen Drehflügelflugzeugs, nämlich eines Hubschraubers H, gemäß einer zweiten Ausgestaltungsform. Diese Darstellung dient auch zur Veranschaulichung eines erfindungsgemäßen Verfahrens. In der Fig. 5 ist die gesamte Zellenstruktur des Hubschraubers H einschließlich Rumpf 16 mit Cockpitbereich 18, Passagierkabinenbereich 20 sowie Heckausleger 2 dargestellt. Die Anordnung der Piezoaktuatoren 12 entspricht im wesentlichen denen des Hubschraubers gemäß der ersten Ausführungsform (Fig. 2 und 3). Anders als bei der ersten Ausführungsform besitzt der Hubschrauber H nach Fig. 5 jedoch einen faltbaren, d.h. um ein Schwenkgelenk seitlich verschwenkbaren hinteren Heckauslegerteil 22 mit einer entsprechenden Falt- und Verriegelungseinrichtung. Die im Bereich des Schwenkgelenks durch den faltbaren Heckauslegerteil verlaufende Trennebene, welche den Heckausleger 2 in einen vorderen und hinteren Heckauslegerteil unterteilt, ist mit dem Bezugszeichen T angedeutet. Eine solche Trennebene T stellt eine Unstetigkeitsstelle in der Biegelinie des gesamten Heckauslegers 2 dar.

Der in Fig. 5 gezeigte Hubschrauber H ist mit zwei Schwingungsgeschwindigkeitssensoren 10a, 10b ausgestattet, die in diesem Fall an dem hinteren Heckauslegerteil 22 und im Cockpitbereich 18 angeordnet sind. Jeder Sensor 10a, 10b ist über die Kontroll- bzw. Regeleinrichtung 24 mit den auf der linken und rechten Heckauslegerseite angebrachten Piezoaktuatoren 12 gekoppelt.

Es wird nun unter Bezugnahme auf Fig. 5 und den darin gezeigten erfindungsgemäßen Hubschrauber H das erfindungsgemäße Verfahren zur Dämpfung einer lateralen Eigenform (Tail Shake) von Heckausleger-Schwingungen beschrieben werden. Aufgrund der erfindungsgemäßen Ausstattung des Hubschraubers H sind hierbei unterschiedliche Varianten bzw. Modi möglich.

### VARIANTE A (aktive Dämpfung):

Diese erfolgt im vorliegenden Beispiel, was die Sensoreinrichtung anbelangt, nur mit Hilfe des hinteren Schwingungsgeschwindigkeitssensors 10a. Bei Auftreten des durch externe Schwingungsanregung induzierten Tail Shake-Effekts führt der Heckausleger 2, 22 durch externe Schwingungsanregung induzierte Schwingungen in seitlicher Richtung aus, die in der Heckauslegerstruktur infolge der auftretenden Biegebelastungen bzw. Biegeverformungen Dehnungen verursachen. Diese Heckausleger-Schwingungen bzw. die daraus resultierenden Schwingungszustände des Hubschraubers H werden durch den am hinteren Heckauslegerteil 22 angeordneten Sensor 10a erfasst, der die Schwingungsgeschwindigkeit des Heckauslegers 2, 22 detektiert und entsprechende Sensorsignale 26a abgibt. Die Sensorsignale 26a sind hierbei ein Maß für die im Bereich des Sensors 10a momentan auftretende Schwingungsrichtung und Schwingungsgeschwindigkeit. Falls ein anderer Sensortyp verwendet werden würde, z.B. ein im Übergangsbereich zum Rumpf 16 angeordneter Dehnungssensor, so würde das Erfassen der induzierten Heckausleger-Schwingungen zweckmäßigerweise durch Erfassen von durch die Schwingungen induzierten Strukturdehnungen des Heckauslegers erfolgen.

Die Sensorsignale 26a werden der Kontroll- bzw. Regeleinrichtung 24 zugeführt. Diese erzeugt mittels des Steuer- bzw. Regelalgorithmus Ansteuersignale 28 für die Piezoaktuatoren 12. Diese Ansteuersignale 28 werden über die Ansteuerelektronik und den Verstärker auf die Piezoaktuatoren 12 geführt.

Die Ansteuerung der Piezoaktuatoren 12 erfolgt hierbei derart, dass die Piezoaktuatoren 12 jeweils gegenphasig und mit einer gegenphasigen Geschwindigkeit zu den Heckausleger-Schwingungen ausgelenkt werden. Da im vorliegenden Ausführungsbeispiel auf beiden Seiten des Heckauslegers 2, 22 Piezoaktuatoren 12 vorgesehen sind, werden diese hierbei zudem gegensinnig angesteuert. Das bedeutet, wenn die auf der linken Heclcauslegerseite befindlichen Piezoaktuatoren 12 eine Elongation ausführen, dann werden die auf der rechten Heckauslegerseite befindlichen Piezoaktuatoren 12 eine Kontraktion ausführen. Dies setzt natürlich voraus, dass die gewählten Piezoaktuatoren 12 für beide Stellmodi (Elongation und Kontraktion) ausgelegt sind. Sollten die Piezoaktuatoren 12 nur für einen dieser Stellmodi ausgelegt sein, so müssten jeweils nur die Piezoaktuatoren 12 einer Heckauslegerseite abwechselnd angesteuert werden. Die zuvor genannte gegensinnige Ansteuerung mit beiden Stellmodi ist natürlich effektiver.

Durch die auf Grundlage der erfassten Heckausleger-Schwingungen erfolgende Betätigung der Piezoaktuatoren 12 werden der schwingungsbedingten Strukturdehnung des Heckauslegers 2, 22 entgegen gerichtete Dehnungen bzw. entgegen gerichtete Biegemomente in die Heckauslegerstruktur eingekoppelt. Aufgrund der beschriebenen Anordnung der Piezoaktuatoren 12 erfolgt das Einkoppeln der gegenphasigen Elongationen und Kontraktionen an Stellen höchster struktureller Dehnungsenergie bzw. an Stellen des höchsten Biegemomentes des Heckauslegers 2, 22. Auf diese Weise wird eine hochwirksame aktive Schwingungsdämpfung der laterale Eigenform (Tail Shake) der Heckausleger-Schwingungen bewirkt.

### VARIANTE B (passive Dämpfung):

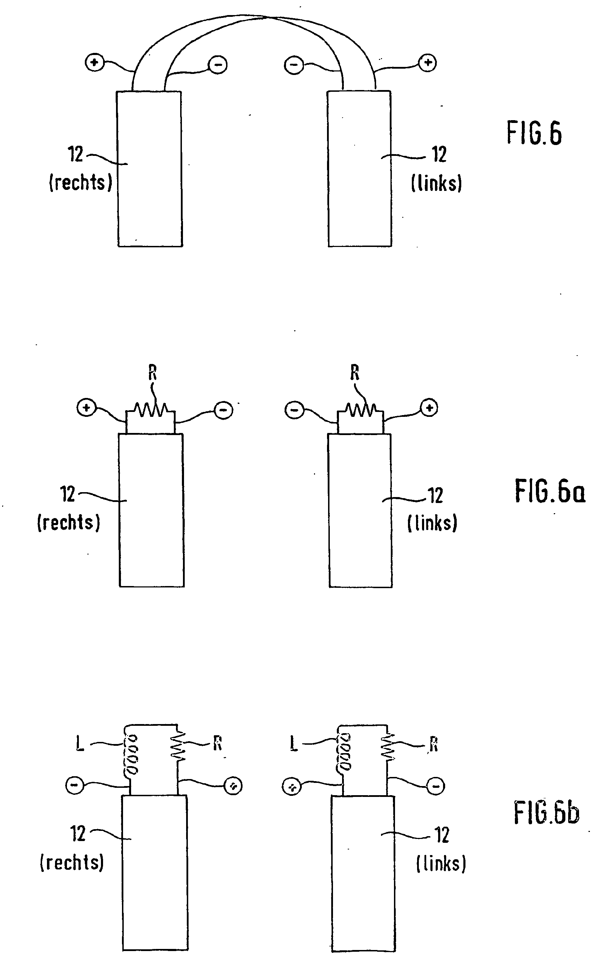

Auch diese Variante erfolgt im vorliegenden Beispiel, was die Sensoreinrichtung anbelangt, nur mit Hilfe des hinteren Schwingungsgeschwindigkeitssensors 10a. Anders als bei der Variante A wird hierbei für die Piezoaktuatoren 12 jedoch keine separate Kontroll- bzw. Regeleinrichtung 24 mit Ansteuerelektronik, Verstärker und separater Strom- bzw. Spannungsquelle verwendet. Vielmehr sind die Piezoaktuatoren 12 auf der einen Heckauslegerseite (links) über eine passive elektrische Schaltung (nicht dargestellt) funktional mit den Piezoaktuatoren auf der anderen Heckauslegerseite (rechts) verbunden. Bei auftretenden Heckausleger-Schwingungen werden die fest mit der Heckauslegerstruktur verbundenen Piezoaktuatoren 12 gedehnt bzw. zusammengedrückt. Unter Ausnutzung des dadurch entstehenden umgekehrten Piezoeffektes (s.o.) werden somit die von den Piezoaktuatoren 12 der jeweils einen Seite abgegebenen Signale als Ansteuersignale auf die Piezoaktuatoren 12 der jeweils anderen Seite geführt, und umgekehrt. So werden die Piezoaktuatoren 12 auf den beiden Heckauslegerseiten jeweils gegenphasig zu den Heckausleger-Schwingungen betätigt. Auf diese Weise wird eine passive Schwingungsdämpfung der Heckausleger-Schwingungen bewirkt. Fig. 6 zeigt ein erstes schematisches Schaltschema für eine einfache passive Dämpfung der zuvor beschriebenen Art.

### VARIANTE B1 (passive Dämpfung):

Fig. 6a zeigt ein zweites schematisches Schaltschema für eine weitere passive Dämpfung. Bei dieser Variante wird eine Dämpfungserhöhung durch Energieumwandlung in einem Widerstand R erzielt. Hierbei wird die im jeweiligen passiven Aktuator 12 erzeugte elektrischen Energie im Widerstand R in Wärme konvertiert. Diese separate, unabhängige Energiekonvertierung erfolgt ohne Verbindung der auf beiden Seiten des Heckauslegers angeordneten Aktuatoren 12 bzw. Aktuatorengruppen.

### VARIANTE B2 (passive Dämpfung):

Fig. 6b zeigt ein drittes schematisches Schaltschema für eine weitere passive Dämpfung. Bei dieser Variante wird eine Dämpfungserhöhung durch Energieumwandlung in einem R-L-Glied erzielt. Hierbei wird die im jeweiligen passiven Aktuator 12 erzeugte elektrischen Energie im R-L-Glied in Wärme konvertiert. Diese separate, unabhängige Energiekonvertierung erfolgt ebenfalls ohne Verbindung der auf beiden Seiten des Heckauslegers angeordneten Aktuatoren 12 bzw. Aktuatorengruppen.

Die Varianten B1 und B2 können grundsätzlich auch auf Variante B angewendet werden, sofern die Aktuatoren 12 (links und rechts) elektrisch zu einem Aktuator(feld) verschaltet werden..

### VARIANTE C (aktive Dämpfung):

Diese erfolgt im vorliegenden Beispiel, was die Sensoreinrichtung anbelangt, nur mit Hilfe des vorderen, im Cockpitbereich 18 angeordneten Schwingungsgeschwindigkeitssensors 10b. Durch diesen Sensor 10b werden die Heckausleger-Schwingungen, die im gesamten Hubschrauber H bemerkbar sind, im Cockpitbereich 18 erfasst. Die Sensorsignale 26b des Sensors 10B werden wiederum der Kontroll- bzw. Regeleinrichtung 24 zugeführt, welche mittels des Steuer- bzw. Regelalgorithmus die Ansteuersignale 28 für die Piezaktuatoren 12 erzeugt. In diesem Fall ist der Steuer- bzw. Regelalgorithmus und damit die Ansteuerung der Piezoaktuatoren 12 so ausgelegt, dass bei der Dämpfung der laterale Eigenform (Tail Shake) die im Cockpitbereich 18 infolge des Tail Shakes auftretenden Schwingungen minimiert bzw. kompensiert werden.

### VARIANTE D (aktive Dämpfung):

Die Variante entspricht weitgehend den Varianten A und C, jedoch werden die Heckausleger-Schwingungen mit beiden Sensoren 10a und 10b sowohl im Cockpitbereich 18 als auch am Heckausleger 2, 22 selbst erfasst. Und die Messsignale 26a, 26b beider Sensoren 10a, 10b werden der Kontroll- bzw. Regeleinrichtung 24 zugeführt. Der Steuer- bzw. Regelalgorithmus ist hierbei so ausgelegt, dass beide Sensorsignale 26a, 26b ausgewertet und geeignete Ansteuerungssignale 28 für die Piezoaktuatoren 12 generiert werden. Es ist ersichtlich, dass der erforderliche Steuer- bzw. Regelalgorithmus komplexer als bei den Varianten A und C, ist, jedoch auch eine differenzierte Dämpfungskontrolle gestattet.

Es ist im Sinne der Erfindung möglich, die zuvor beschriebenen Varianten auch zu kombinieren. Überdies können die zuvor beschriebenen Varianten grundsätzlich auch mit weiteren Sensoren und Piezoaktuatoren an einer oder mehreren anderen Stellen des Hubschraubers H ergänzt bzw. kombiniert werden. So kann mindestens ein weiterer Sensor beispielweise im Passagierkabinenbereich 20 des Hubschraubers H angeordnet sein. Ferner kann das Einkoppeln der gegenphasigen Elongationen und/oder Kontraktionen mittels der Aktuatoren 12 in unmittelbarer Nähe von solchen Stellen des Heckauslegers 2, 22 erfolgt, an denen eine Biegelinie des Heckauslegers 2, 22 eine Unstetigkeitsstelle aufweist.

Dies ist, wie weiter oben bereits erwähnt, zum Beispiel an der durch den Faltmechanismus gebildeten Trennebene T des in Fig. 5 gezeigten Hubschraubers H der Fall.

Obwohl das erfindungsgemäße Verfahren zuvor nur im Zusammenhang mit dem Tail Shake-Effekt beschrieben wurde, ist die Erfindung selbstverständlich nicht auf diese Schwingungsform beschränkt. Die Erfassung und Dämpfung der vertikalen Eigenform (Vertical Bouncing) der Heckausleger-Schwingungen kann bei Bereitstellung entsprechend angeordneter Aktuatoren (z.B. an der Ober- und Unterseite des Heckauslegers) grundsätzlich auf analoge Weise zu der Erfassung und Dämpfung der lateralen Eigenform (Tail Shake) erfolgen. Ein gleiches gilt für kombinierte Schwingungsformen bzw. Schwingungen, die eine andere als die laterale bzw. vertikale Richtung besitzen. Diesbezüglich sind dann auch Schwingungssensoren vorzusehen, welche Schwingungen in der für die jeweilige Schwingungsform auftretende Schwingungsrichtung bzw. in mehreren Richtungen erfassen können.

Die Wirksamkeit und Leistungsfähigkeit der erfindungsgemäßen Lösung konnte im Rahmen von praktischen Versuchen sowohl mit aktiver als auch passiver Dämpfung anhand eines in einem Prüffeld eingespannten realen Heckauslegers eines Hubschraubers nachgewiesen werden.

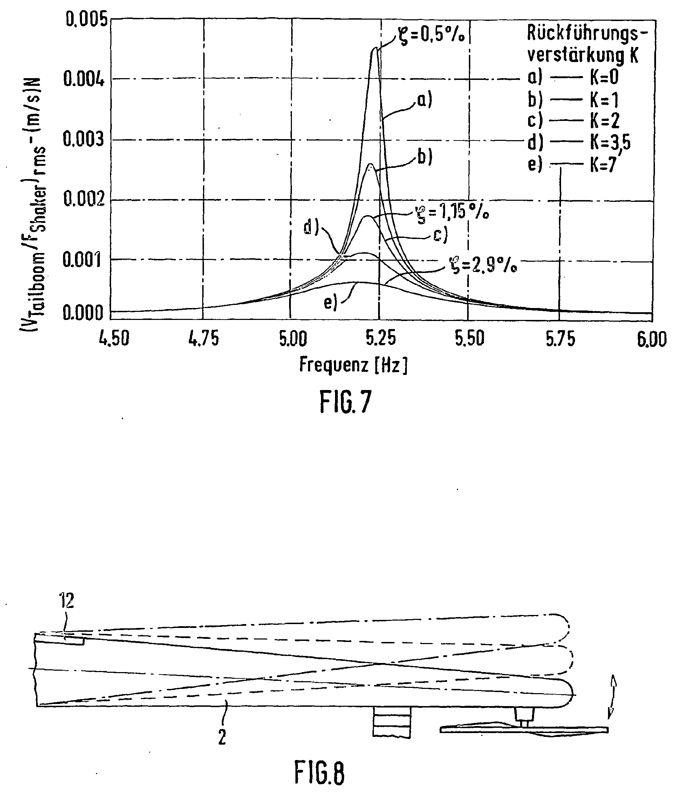

Fig. 7 zeigt ein schematisches Diagramm zur beispielhaften Veranschaulichung des mit dem erfindungsgemäßen Verfahren hinsichtlich des Tail Shake-Effekts erzielbaren Heckausleger-Dämpfungsverhaltens bei einem erfindungsgemäßen Hubschrauber. In der diesem Diagramm zugrunde liegenden Versuchsreihe kam eine aktive Heckausleger-Schwingungsdämpfungsvorrichtung mit Piezokeramik-Aktuatoren des Herstellers ACX zur Anwendung, die jeweils aus zwei hintereinander angeordneten piezokeramischen Wafern je Ebene bei zwei übereinander liegenden Ebenen aufgebaut sind. Als Schwingungssensor wurde ein Schwingungsgeschwindigkeitsgeber verwendet.

Die mit diesem aktiven Schwingungsdämpfungssystem bei konstanter externer Anregung in Abhängigkeit unterschiedlicher Rückführungsverstärkungen erzielte Dämpfung ζ der ersten lateralen Eigenform (Tail Shake) der Heckauslegerstruktur ist in Kurven a) bis e) als kraftnormierte Schwingungsgeschwindigkeit V_{Tailboom}/F_{Shaker} (in [m/s]/N) über der Frequenz f (in Hz) dargestellt. Wie aus Fig. 7 ersichtlich ist, konnte in dem gezeigten Frequenzbereich eine Erhöhung der Heckauslegerstruktur-Dämpfung von 0,5 % auf 2,9 % erreicht werden. Vergleichbare Resultate sind auch bei einer Dämpfung der ersten vertikalen Eigenform (Vertical Bouncing) realisierbar.

Fig. 8 zeigt eine schematische Draufsicht auf einen Heckauslegerbereich eines erfindungsgemäßen Drehflügelflugzeugs (hier: ein Hubschrauber) gemäß einer dritten Ausgestaltungsform. Bei diesem Beispiel ist der Heckausleger 2 im wesentlichen in Richtung der zu dämpfenden Schwingung (hier: laterale Eigenform, d.h. Tail Shake; in der Fig. 8 durch einen Doppelpfeil angedeutet) einseitig vorgekrümmt ist. Die Vorkrümmung ist in der Fig. 8 mit einer durchgehenden Umrisslinie zur Verdeutlichung stark überzeichnet dargestellt. Mindestens ein Aktuator 12 ist in einer in Bezug zur Mittenlängsachse L des Heckauslegers 2 asymmetrischen Anordnung an einem Seitenbereich des Heckauslegers 2 angeordnet. Der Aktuator 12 ist in diesem Fall so ausgelegt, dass er nur Zugkräfte erzeugen und auf die Heckauslegerstruktur übertragen bzw. in diese einkoppeln kann. In einem neutralen Betriebszustand ist der Aktuator 12 so betätigt, dass dieser den Heckausleger 2 zunächst gerade zieht bzw. biegt (gestrichelte Umrisslinie), wodurch der Heckausleger 2 gegen die Wirkung des Aktuators 12 elastisch vorgespannt wird. Beim Auftreten von Heckausleger-Schwingungen (hier: Tail Shake) wird der Aktuator 12 gegenphasig zu den Heckausleger-Schwingungen aktiviert bzw. in einen deaktivierten Zustand geschaltet. Im aktivierten Zustand des Aktuator 12 werden die gegenphasigen Dehnung dann durch eine aktive Stellbewegung des Aktuators 12 in den Heckausleger 2 eingekoppelt; Hierbei wird der Heckausleger 2 entgegen der Richtung der Vorkrümmung gebogen (strichpunktierte Umrisslinie). Im deaktivierten Zustand des Aktuators 12 hingegen übernimmt der vorgespannte Heckausleger 2 selbst diese Aufgabe. D.h., die elastische Rückstellwirkung des zuvor durch den Aktuator 12 vorgespannten bzw. in Gegenrichtung ausgelenkten Heckauslegers 2 führt nun zu einer gegenphasigen Dehnung bzw. Biegung des Heckauslegers 2. Somit lässt sich wiederum die gewünschte Dämpfung der Heckausleger-Schwingung erreichen.

Die im Zusammenhang mit Fig. 8 beschriebene Dämpfungsmethode funktioniert auf analoge Art und Weise, wenn der Heckausleger 2 nicht vorgebogen, sondern z.B. durch ein separates Vorspannelement, wie z.B. eine Feder, vorgespannt wird. Falls der oder die verwendeten Aktuatoren in mindestens zwei Stellrichtungen zu betätigen sind, kann die asymmetrische Aktuatorenanordnung natürlich auch ohne eine Vorspannung oder Vorbiegung des Heckauslegers realisiert werden. In Abhängigkeit der zu dämpfenden Schwingungsform ist der mindestens eine Aktuator bei einer asymmetrischen Aktuatoranordnung entweder an einer Oberseite, einer Unterseite, einer linken Seite, einer rechten Seite des Heckauslegers (einschließlich dessen Übergangsbereich zum Rumpf oder etwaigen anderen Anbaukomponenten) oder an entsprechenden Zwischenpositionen angeordnet.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs können das erfindungsgemäße Drehflügelflugzeug und das erfindungsgemäße Verfahren vielmehr auch andere als die oben konkret beschriebenen Ausgestaltungs- bzw. Ausführungsformen annehmen. So können die Schwingungssensoren bei bestimmten Anwendungsfällen beispielsweise auch an Anbaukomponenten angeordnet sein, die am Heckausleger befestigt sind, z.B. an einem Höhen- oder Seitenleitwerk, einer Heckrotorummantelung oder dergleichen. Die Aktuatoren der Heckausleger-Schwingungsdämpfungsvorrichtung können zudem auch an anderen schwingungsrelevanten Bereichen des Heckauslegers, wie zum Beispiel an vorderen und hinteren Endbereichen des Heckauslegers, an Übergangsbereichen zu Seiten- und Höhenleitwerken sowie zu Heckrotorkomponenten oder direkt an denselben eingesetzt werden.

Die Aktuatoren können zudem so angeordnet werden, dass ihre Wirkrichtung in einem schrägen Winkel (z.B. von 45°) zur Längsachse des Heckauslegers verläuft. Die Wirkrichtungen mehrerer Aktuatoren können sich hierbei auch überkreuzen. Eine solche Anordnung kann in Kombination mit einem geeigneten Sensor beispielsweise zur Dämpfung von Torsionsschwingungen verwendet werden. Mehrere solcher schräg angeordneter Aktuatoren können durch eine geeignete, z.B. elektronische oder mechanische Mischung jedoch auch zur Dämpfung des Tail Shake oder des Vertical Bouncing eingesetzt werden. Dies lässt sich beispielsweise dadurch verwirklichen, dass mindestens zwei solcher Aktuatoren gleichzeitig betätigt werden und die Richtung des aus der Stellwirkung beider Aktuatoren resultierenden Kraftvektors im wesentlichen parallel zur Mittenlängsachse des Heckauslegers und in einem Abstand zu dieser verläuft.

Neben den beschriebenen Piezoaktuatoren sind auch andere Aktuatortypen denkbar, z.B. elektrische, elektromechanische, elektromagnetische, hydraulische, mechanische Aktuatoren, oder dergleichen, sowie Mischformen daraus. Die Aktuatoren können zur Erzielung einer Stellwirkung auch mit Vorspannmitteln, wie zum Beispiel Federn oder dergleichen kombiniert sein.

### Bezugszeichenliste

Es bezeichnen:
- 2: Heckausleger
- 2a: Innere Oberfläche von 2
- 2b: Äußere Oberfläche von 2
- 4: Höhenleitwerk
- 6: Seitenleitwerk
- 8: Hauptrotordrehmoment-Kompensationseinrichtung
- 10: Schwingungssensor(en)
- 10a: Hinterer Schwingungssensor
- 10b: Vorderer Schwingungssensor
- 12: Aktuatoren / Piezoaktuatoren
- 14: Anschluss von 12
- 16: Rumpf
- 18: Cockpitbereich
- 20: Passagierkabinenbereich
- 22: Hinterer Heckauslegerteil 22
- 24: Kontroll- bzw. Regeleinrichtung
- 26a: Sensorsignale von 10a
- 26b: Sensorsignale von 10b
- 28: Ansteuersignale für 12

- H: Hubschrauber
- L: Mittenlängsachse von 2
- T: Trennebene in 2
- X: Einzelheit
- ζ: Heckausleger-Dämpfung

## Patentansprüche

1. Verfahren zur Dämpfung von Heckausleger-Schwingungen von Drehflügehlugzeugen, insbesondere von Hubschraubern (H), umfassend folgende Schritte:
- Erfassen (10; 10a, 10b) von durch externe Schwingungsanregung induzierten Heckausleger-Schwingungen, und
- auf Grundlage der erfassten induzierten Heckausleger-Schwingungen Erzeugen (12) und Einkoppeln (12) von den induzierten Heckausleger-Schwingungen gegenphasigen, **flächig applizierten** Dehnungen in den Heckausleger (2. 22)
und **dadurch**
Dämpfen der extern angeregten induzierten Heckausleger-Schwingungen.

2. Verfahren nach Anspruch 1,
**dadurch gekennzeichnet, dass**
das Einkoppeln (12) der gegenphasigen, **flächig applizierten** Dehnungen an Stellen höchster struktureller Dehnungsenergie des Heckauslegers (2, 22) erfolgt.

3. Verfahren nach einem oder mehreren der vorher genannten Ansprüche,
**dadurch gekennzeichnet, dass**
das Einkoppeln (12) der gegenphasigen, **flächig applizierten** Dehnungen in unmittelbarer Nähe von solchen Stellen des Heckauslegers (2, 22) erfolgt, an denen eine Biegelinie des Heckauslegers (2, 22) eine **Unstetigkeitsstelle** (T) aufweist.

4. Verfahren nach einem oder mehreren der vorher genannten Ansprüche,
**dadurch gekennzeichnet, dass**
das Erfassen der induzierten Herkausleger-Schwingungen durch Erfassen von induzierten Struktuniehnungen des Heckausfegers (2, 22) erfolgt.

5. Verfahren nach Auspruch 4,
**dadurch gekennzeichnet, dass**
das Erfassen (10; 10a, 10b) der induzierten Heckausleger-Strukturdehnungen durch Erfassen von Schwingungsgeschwindigkeiten des Heckauslegers (2, 22) erfolgt.

6. Verfahren nach einem oder mehreren der vorher genannten Ansprüche,
**dadurch gekennzeichnet, dass**
die Heckausleger-Schwingungen am Heckausleger (2, 22) erfasst (10, 10a) werden.

7. Verfahren nach einem oder mehreren der vorher genannten Ansprüche,
**dadurch gekennzeichnet, dass**
die Heckausleger-Schwingungen in einem Cockpitbereich (18) und/oder Passagierkabinenbereich (20) des Drehflügelflugzeugs erfasst werden.

8. Verfahren nach einem oder mehreren der vorher genannten Ansprüche,
**dadurch gekennzeichnet, dass**
die gegenphasigen, **flächig applizierten** Dehnungen mit einer gegenphasigen Dehnungsgeschwindigkeit in den Heckausleger (2, 22) eingekoppelt (12) werden.

9. Verfahren nach einem oder mehreren der vorher genannten Ansprüche,
**dadurch gekennzeichnet, dass**
eine laterale Eigenform der Heckausleger-Schwingungen erfasst (10; 10a, 10b) und gedämpft wird.

10. Verfahren nach einem oder mehreren der vorher genannten Ansprüche,
**dadurch gekennzeichnet, dass**
eine vertikale Eigenform der Heckausleger-Schwingungen erfasst und gedämpft wird.

11. Drehflügelflugzeug, insbesondere ein Hubschrauber (H), umfassend einen Rumpf (16), einen In den Rumpf (16) integrierten Cockpitbereich (18), einen am Rumpf (16) angeordneten Heckausleger (2, 22) sowie eine Heckausleger-Schwingungsdämpfungsvorrichtung mit
- mindestens einer Sensoreinrichtung (10; 10a, 10b) zum Erfassen von durch externe Schwingungsanregung induzierten Heckausleger-Schwingungen, sowie
- mindestens einen Aktuator (12) zum Erzeugen und Einkoppeln von den induzierten Heckausleger-Schwingungen gegenphasigen Dehnungen in den Heckausleger (2,22), wobei der Aktuator (12) mit der Sensoreinrichtung (10; 10a, 10b) funktional gekoppeit ist und an einer Seite des Heckauslegers (2, 22) an einer Heckauslegerstruktur angreift, **dadurch gekennzeichnet, dass** der Aktuator mit der beckanslegestruktur einen flächigen Verbund bildet.

12. Drehflügelflugzeug nach Anspruch 11,
**gekennzeichnet durch**
mindestens zwei bezogen auf einen Querschnitt des Heckauslegers (2, 22) an gegenüberliegenden Seiten des Heckauslegers (2, 22) an der Heckauslegeristruktur angreifenden, mit dieser jeweils einen flächigen Verbund bildenden und mit der Sensoreinrichtung (10; 10a, 10b) funktional gekoppelten Aktuatoren (12) zum Erzeugen und Einkoppeln von den induzierten Heckausieger-Schwingungen gegenphasigen Dehnungen in den Heckausleger (2, 22).

13. Drehflügelflugzeug nach Anspruch 11
**dadurch gekennzeichnet, dass**
der mindestens eine Aktuator (12) an nur einer Seite des Heckauslegers (2, 22) oder an nur einer Seite eines Übergangsbereichs zwischen dem Heckausleger (2, 22) und einer Anbaukomponente (4, 6, 8, 16) angeordnet ist, welche Seite ausgewählt ist aus einer Gruppe von Seiten, umfassend eine Oberseite, eine Unterseite, eine linke Seite, eine rechte Seite des Heckauslegers (2,22).

14. Drehflügelflugzeug nach einem oder mehreren der Ansprüche 11 bis 13.
**dadurch gekennzeichnet, dass**
von mindestens zwei Aktuatoren (12) jeweils einer an der linken und der andere an der rechten Seite des Heckauslegers (2, 22) und/oder eines Übergangsbereichs zwischen dem Heckausleger (2, 22) und einer Anbaukomponente (4, 6, 8, 16) angeordnet ist.

15. Drehflügelflugzeug nach einem oder mehreren der Ansprüche 11 bis 14,
**dadurch gekennzeichnet, dass**
von mindestens zwei Aktuatoren (12) jeweils einer an der Oberseite und der andere an der Unterseite des Heckauslegers (2, 22) und/oder eines Übergangsbereichs zwischen dem Heckausleger (2, 22) und einer Anbaukomponente (4, 6, 8, 16) angeordnet ist.

16. Drehflügelflugzeug nach einem oder mehreren der Ansprüche 11 bis 15,
**dadurch gekennzeichnet, dass**
der mindestens eine Aktuator (2, 22), **der mit der Heckauslegerstruktur einen flächigen Verbund bildet,** auf die Hackauslegerstruktur appliziert ist

17. Drehflügelflugzeug nach einem oder mehreren der Ansprüche 11 bis 16,
**dadurch gekennzeichnet, dass**
der mindestens eine Aktuator (2, 22), **der mit der Heckauslegerstruktur einen flächigen Verbund bildet** in die Heckauslegerstruktur integriert ist.

18. Drehflügelflugzeug nach einem oder mehreren der Ansprüche 11 bis 17.
**dadurch gekennzeichnet, dass**
der Heckausleger (2, 22) im wesentlichen in einer Richtung der zu dämpfenden Schwingung vorgespannt oder vorgekrümmt ist und mit mindestens einem entgegen der Vorspann- oder Vorkrümmungsrichtung betätigbaren Aktuator (12) verbunden ist.

19. Drehflügelflugzeug nach einem oder mehreren der Ansprüche 11 bis 18,
**dadurch gekennzeichnet, dass**
der mindestens eine Aktuator ein Piezoaktuator (12) ist.

20. Drehflügelflugzeug nach Ansprüch 19,
**dadurch gekennzeichnet, dass**
der Piezoaktuator (12) flach und plattenförmig ausgebildet ist und seine Stellrichtung im wesentlichen parallel zur Plattenebene verläuft.

21. Drehflügelflugzeug nach einem oder mehreren der Ansprüche 11 bis 20,
**dadurch gekennzeichnet, dass**
mehrere flächige Plezoaktuatoren schichtweise übereinander angeordnet zu einem flächigen, plattenförmigen Aktuatorpaket (12) konfektioniert sind.

22. Drehflugelflugzeug nach einem oder mehreren der Anspruche 11 bis 21,
**dadurch gekennzeichnet, dass**
der mindestens eine Aktuator (12) über ein diskretes Krafteinleitungselement an die Heckauslegerstruktur angebunden ist.

23. Drehflügelflugzeug nach einem oder mehreren der Ansprüche 11 bis 22,
**dadurch gekennzeichnet, dass**
die Sensoreinrichtung mindestens einen im Bereich des Heckauslegers (2, 22) angeordneten Schwingungssensor (10; 10a) aufweist.

24. Drehflügelflugzeug nach einem oder mehreren der Ansprüche 11 bis 23.
**dadurch gekennzeichnet, dass**
die Sensoreinrichtung mindestens einen im Cockpitbereich (18) angeordneten Schwingungssensor (10b) aufweist

25. Drehflügelflugzeug nach einem oder mehreren der Ansprüche 11 bis 24,
**dadurch gekennzeichnet, dass**
dieses mindestens eine mit der Sensoreinrichtung (10; 10a, 10b) und dem mindestens einen Aktuator (12) Ober eine aktive Schaltung funktional gekoppelte Kontroll- oder Regeleinrichtung (24) zum kontrollierten Betätigen des mindestens einen Aktuators (12) besitzt.

26. Drehflügelflugzeug nach einem oder mehreren der Ansprüche 11 bis 25,
**dadurch gekennzeichnet, dass**
mindesten ein erster Aktuator (12), der an einer ersten Heckauslegerseite angeordnet ist, durch eine passive Schaltung mit mindestens einem zweiten Aktuator (12), der an einer gegenüberliegenden zweiten Heckauslegerseite angeordnet ist, funktional verbunden und durch ein Steuersignal des ersten Aktuators (12) gegenphasig zu einer Heckausleger-Schwingung zu betätigen ist; und umgekehrt der zweite Aktuator (12) durch ein Steuersignal des ersten Aktuators (12) gegenphasig zu einer Heckausteger-Schwingung zu betätigen ist.

## Claims

1. A method for damping tailboom vibrations of rotorcraft, in particular of helicopters (H), comprising the following steps:
- detection (10; 10a, 10b) of tailboom vibrations induced by external excitation of vibrations, and
- on the basis of the induced tailboom vibrations detected, generation (12) and introduction (12) into the tailboom (2, 22) of elongations applied over an area in phase opposition to the induced tailboom vibrations and thereby damping of the externally excited induced tailboom vibrations.

2. A method according to claim 1, **characterized in that** the introduction (12) of the elongations applied over an area in phase opposition is effected at points of highest structural elongation energy of the tailboom (2, 22).

3. A method according to one or more of the aforesaid claims, **characterized in that** the introduction (12) of the elongations applied over an area in phase opposition is effected in direct proximity to such points of the tailboom (2, 22) at which an elastic axis of the tailboom (2, 22) exhibits a point of discontinuity (T).

4. A method according to one or more of the aforesaid claims, **characterized in that** the detection of the induced tailboom vibrations is effected by detection of induced structural elongations of the tailboom (2, 22).

5. A method according to claim 4, **characterized in that** the detection (10; 10a, 10b) of the induced tailboom structural elongations is effected by detection of vibration velocities of the tailboom (2, 22).

6. A method according to one or more of the aforesaid claims, **characterized in that** the tailboom vibrations are detected (10, 10a) at the tailboom (2, 22).

7. A method according to one or more of the aforesaid claims, **characterized in that** the tailboom vibrations are detected in a cockpit area (18) and/or passenger cabin area (20) of the rotorcraft.

8. A method according to one or more of the aforesaid claims, **characterized in that** the elongations applied over an area in phase opposition are introduced into the tailboom (2, 22) at an elongation velocity in phase opposition.

9. A method according to one or more of the aforesaid claims, **characterized in that** a lateral eigenform of the tailboom vibrations is detected (10; 10a, 10b) and damped.

10. A method according to one or more of the aforesaid claims, **characterized in that** a vertical eigenform of the tailboom vibrations is detected and damped.

11. A rotorcraft, in particular a helicopter (H), comprising a fuselage (16), a cockpit area (18) integrated into the fuselage (16), a tailboom (2, 22) arranged on the fuselage (16) and a tailboom vibration damping device with
- at least one sensor device (10; 10a, 10b) for detecting tailboom vibrations induced by external excitation of vibrations, and
- at least one actuator (12) for generating and introducing elongations in phase opposition to the induced tailboom vibrations into the tailboom (2, 22), the actuator (12) being coupled functionally to the sensor device (10; 10a, 10b) and acting on one side of the tailboom (2, 22) on a tailboom structure,
**characterized in that** the actuator forms a two-dimensional composite with the tailboom structure.

12. A rotorcraft according to claim 11, **characterized by** at least two actuators (12) acting relative to a cross-section of the tailboom (2, 22) on opposing sides of the tailboom (2, 22) on the tailboom structure, forming a two-dimensional composite in each case with this and coupled functionally to the sensor device (10; 10a, 10b) for generating and introducing into the tailboom (2, 22) elongations in phase opposition to the induced tailboom vibrations.

13. A rotorcraft according to claim 11, **characterized in that** the at least one actuator (12) is arranged on only one side of the tailboom (2, 22) or on only one side of a transition area between the tailboom (2, 22) and a mounted component (4, 6, 8, 16), which side is selected from a group of sides, comprising a top side, a bottom side, a left side, a right side of the tailboom (2, 22).

14. A rotorcraft according to one or more of claims 11 to 13, **characterized in that** of at least two actuators (12), respectively one is arranged on the left and the other on the right side of the tailboom (2, 22) and/or of a transition area between the tailboom (2, 22) and a mounted component (4, 6, 8, 16).

15. A rotorcraft according to one or more of claims 11 to 14, **characterized in that** of at least two actuators (12), respectively one is arranged on the top side and the other on the bottom side of the tailboom (2, 22) and/or of a transition area between the tailboom (2, 22) and a mounted component (4, 6, 8, 16).

16. A rotorcraft according to one or more of claims 11 to 15, **characterized in that** the at least one actuator (2, 22), which forms a two-dimensional composite with the tailboom structure, is applied to the tailboom structure.

17. A rotorcraft according to one or more of claims 11 to 16, **characterized in that** the at least one actuator (2, 22), which forms a two-dimensional composite with the tailboom structure, is integrated into the tailboom structure.

18. A rotorcraft according to one or more of claims 11 to 17, **characterized in that** the tailboom (2, 22) is pretensioned or pre-bent substantially in one direction of the vibration to be damped and is connected to at least one actuator (12) operable opposite to the direction of pretensioning or pre-bending.

19. A rotorcraft according to one or more of claims 11 to 18, **characterized in that** the at least one actuator is a piezoactuator (12).

20. A rotorcraft according to claim 19, **characterized in that** the piezoactuator (12) is formed flat and plate-like and its actuating direction runs substantially parallel to the plate plane.

21. A rotorcraft according to one or more of claims 11 to 20, **characterized in that** several two-dimensional piezoactuators are fabricated arranged layer-wise above one another to form a two-dimensional, plate-like actuator packet (12).

22. A rotorcraft according to one or more of claims 11 to 21, **characterized in that** the at least one actuator (12) is connected via a discrete force introduction element to the tailboom structure.

23. A rotorcraft according to one or more of claims 11 to 22, **characterized in that** the sensor device has at least one vibration sensor (10; 10a) arranged in the area of the tailboom (2, 22).

24. A rotorcraft according to one or more of claims 11 to 23, **characterized in that** the sensor device has at least one vibration sensor (10b) arranged in the cockpit area (18).

25. A rotorcraft according to one or more of claims 11 to 24, **characterized in that** this has at least one control or adjusting device (24) coupled functionally via an active circuit to the sensor device (10; 10a, 10b) and the at least one actuator (12) for the controlled operation of the at least one actuator (12).

26. A rotorcraft according to one or more of claims 11 to 25, **characterized in that** at least one first actuator (12), which is arranged on a first tailboom side, is connected functionally by a passive circuit to at least one second actuator (12), which is arranged on an opposing second tailboom side, and is to be operated by a control signal of the first actuator (12) in phase opposition to a tailboom vibration; and conversely the second actuator (12) is to be operated by a control signal of the first actuator (12) in phase opposition to a tailboom vibration.

## Revendications

1. Procédé visant à amortir des vibrations du cantilever arrière de giravions, en particulier d'hélicoptères (H), comprenant les étapes suivantes :
- détection (10 ; 10a, 10b) des vibrations induites du cantilever arrière par excitation externe, et
- sur la base des vibrations induites détectées du cantilever arrière, production (12) et application de déformations de manière plane, en opposition de phase avec les vibrations induites du cantilever arrière, dans le cantilever arrière (2, 22) ; et de ce fait, amortissement des vibrations induites du cantilever arrière, excitées de manière externe.

2. Procédé selon la revendication 1,
**caractérisé en ce que**
l'application (12) des déformations de manière plane, en opposition de phase, s'effectue en des points d'énergie maximale de déformation structurelle du cantilever arrière (2, 22).

3. Procédé selon l'une ou plusieurs des revendications précédentes,
**caractérisé en ce que**
l'application (12) des déformations de manière plane, en opposition de phase, s'effectue à proximité immédiate des points du cantilever arrière (2, 22) au niveau desquels une courbe de flexion élastique du cantilever arrière (2, 22) présente un point de discontinuité (T).

4. Procédé selon l'une ou plusieurs des revendications précédentes,
**caractérisé en ce que**
la détection des vibrations induites du cantilever arrière s'effectue par détection des déformations de structure induites du cantilever arrière (2, 22).

5. Procédé selon la revendication 4,
**caractérisé en ce que**
la détection (10 ; 10a; 10b) des déformations de structure induites du cantilever arrière s'effectue par la détection des vitesses de vibration du cantilever arrière (2, 22).

6. Procédé selon l'une ou plusieurs des revendications précédentes,
**caractérisé en ce que**
la détection (10, 10a, 10b) des vibrations du cantilever arrière, s'effectue au niveau du cantilever arrière (2, 22).

7. Procédé selon l'une ou plusieurs des revendications précédentes,
**caractérisé en ce que**
les vibrations du cantilever arrière sont détectées dans une zone du poste de pilotage (18) et/ou dans une zone de la cabine des passagers (20) du giravion.

8. Procédé selon l'une ou plusieurs des revendications précédentes,
**caractérisé en ce que**
les déformations sont appliquées de manière plane, en opposition de phase, dans le cantilever arrière (2, 22) avec une vitesse de déformation en opposition de phase.

9. Procédé selon l'une ou plusieurs des revendications précédentes,
**caractérisé en ce que**
la détection (10, 10a, 10b) d'une forme propre latérale des vibrations du cantilever arrière est effectuée et amortie.

10. Procédé selon une ou plusieurs des revendications précédentes,
**caractérisé en ce qu'**
une forme propre verticale des vibrations du cantilever arrière est détectée (10 ; 10a, 10 b) et amortie.

11. Giravion, en particulier hélicoptère (H), comprenant un fuselage (16), une zone de poste de pilotage (18) intégrée dans le fuselage (16), un cantilever arrière (2, 22) disposé au niveau du fuselage (16), ainsi qu'un dispositif d'amortissement de vibrations du cantilever arrière, comportant
- au moins un dispositif de détection (10 ; 10a, 10b) pour détecter des vibrations du cantilever arrière induites par une excitation de vibration externe ;
- au moins un actionneur (12) pour produire et appliquer des déformations, en opposition de phase avec les vibrations induites dans le cantilever arrière (2, 22), l'actionneur (12) étant couplé fonctionnellement avec le dispositif de détection (10 ; 10 a, 10b) et étant en prise, sur un côté du cantilever arrière (2, 22), avec une structure de cantilever arrière,
**caractérisé en ce que**
l'actionneur forme un assemblage plan avec la structure de cantilever arrière.

12. Giravion selon la revendication 11,
**caractérisé en ce qu'**
au moins deux actionneurs (12) en prise avec la structure de cantilever arrière, sur deux côtés opposés du cantilever arrière (2, 22) par rapport à une section transversale de celui-ci, forment à chaque fois un assemblage plan avec celle-ci et ils sont couplés fonctionnellement avec le dispositif de détection (10 ; 10 a, 10b) en vue de produire et d'appliquer des déformations, en opposition de phase avec les vibrations induites de cantilever arrière, dans le cantilever arrière (2, 22).

13. Giravion selon la revendication 11,
**caractérisé en ce qu'**
au moins un actionneur (12) est disposé seulement sur un côté du cantilever arrière (2, 22) ou seulement sur un côté d'une zone de transition entre le cantilever arrière (2, 22) et un composant annexe (4, 6, 8, 16), ce côté étant sélectionné parmi un groupe de côtés comprenant un côté supérieur, un côté inférieur, un côté gauche et un côté droit du cantilever arrière (2, 22).

14. Giravion selon l'une ou plusieurs des revendications précédentes,
**caractérisé en ce que**
parmi au moins deux actionneurs (12), l'un est à chaque fois disposé sur le côté gauche et l'autre sur le côté droit du cantilever arrière (2, 22) et/ou d'une zone de transition entre le cantilever arrière (2, 22) et un composant annexe (4, 6, 8, 16).

15. Giravion selon l'une ou plusieurs des revendications 11 à 14,
**caractérisé en ce que**
parmi au moins deux actionneurs (12), l'un est à chaque fois disposé sur le côté supérieur et l'autre sur le côté inférieur du cantilever arrière (2, 22) et/ou d'une zone de transition entre le cantilever arrière (2, 22) et un composant annexe (4, 6, 8, 16).

16. Giravion selon l'une ou plusieurs des revendications 11 à 15,
**caractérisé en ce qu'**
au moins un actionneur (2, 22) formant un assemblage plan avec la structure de cantilever arrière est appliqué sur la structure de cantilever arrière.

17. Giravion selon l'une ou plusieurs des revendications 11 à 16,
**caractérisé en ce qu'**
au moins un actionneur (2, 22) formant un assemblage plan avec la structure de cantilever arrière est intégré dans la structure de cantilever arrière.

18. Giravion selon l'une ou plusieurs des revendications 11 à 17,
**caractérisé en ce que**
le cantilever arrière (2, 22) est précontraint ou précourbé essentiellement suivant une direction de la vibration à amortir, et est relié à au moins un actionneur pouvant être actionné à l'encontre de la direction de précontrainte ou de précourbure.

19. Giravion selon une ou plusieurs des revendications 11 à 18,
**caractérisé en ce qu'**
au moins un actionneur est un piézoactionneur (12).

20. Giravion selon la revendication 19,
**caractérisé en ce que**
le piézoactionneur (12) est plate, en forme de plaque, et sa direction de réglage s'oriente essentiellement de manière parallèle au plan de la plaque.

21. Giravion selon l'une ou plusieurs des revendications 11 à 20,
**caractérisé en ce que**
plusieurs piézoactionneurs plans, disposés en couche les uns au-dessus des autres, forment un paquet d'actionneurs (12) plans en forme de plaque.

22. Giravion selon l'une ou plusieurs des revendications 11 à 21,
**caractérisé en ce qu'**
au moins un actionneur (12) est fixé, par l'intermédiaire d'un élément discret d'introduction de force, à la structure de cantilever arrière.

23. Giravion selon l'une ou plusieurs des revendications 11 à 22,
**caractérisé en ce que**
le dispositif de détection comporte au moins un détecteur de vibrations (10 ; 10a) dans la zone du cantilever arrière (2, 22).

24. Giravion selon l'une ou plusieurs des revendications 11 à 23,
**caractérisé en ce que**
le dispositif de détection comporte au moins un détecteur de vibrations (10b) dans la zone du poste de pilotage (18).

25. Giravion selon l'une ou plusieurs des revendications 11 à 24,
**caractérisé en ce qu'**
il possède un dispositif de contrôle ou de réglage (24), couplé fonctionnellement par un circuit actif au dispositif de détection (10 ; 10a, 10b) et au moins un actionneur (12), en vue de l'actionnement contrôlé d'au moins un actionneur (12).

26. Giravion selon l'une ou plusieurs des revendications 11 à 25,
**caractérisé en ce qu'**
au moins un premier actionneur (12), disposé sur un premier côté du cantilever arrière, est lié fonctionnellement par un circuit passif à au moins un second actionneur (12) disposé sur un second côté opposé du cantilever arrière et doit être actionné par un signal de commande du second actionneur (12) en opposition de phase avec une vibration du cantilever arrière ; et inversement, le second actionneur (12) doit être actionné par un signal de commande du premier actionneur (12) en opposition de phase avec une vibration du cantilever arrière
